# EUROPEAN PATENT APPLICATION

(11) **EP 4 524 299 A1**
(43) Date of publication of application: **19.03.2025**
(21) Application number: 23197807.3
(22) Date of filing: 15.09.2023
(51) Int. Cl.: D01D 4/02, D01D 5/098, B29C 48/05, D01D 5/08, D01D 5/084, D01D 4/06, D04H 3/16

(54) **SPINNERET HEAD AND RELATIVE APPARATUS FOR THE PRODUCTION OF FILAMENTS**

(71) Applicant: Fare' S.p.A. a socio unico, 21054 Fagnano Olona (VA) (IT)
(72) Inventor: FARE', Rosaldo, 21054 Fagnano Olona (VA) (IT)
(74) Representative: Gislon, Gabriele

(57) **Abstract**

Spinning head (1) for a plant for making synthetic filaments, comprising a body (7) provided with an extrusion surface (8) having a plurality of extrusion holes (30), a distribution chamber (4) made in said body and comprising a plurality of walls, a feed channel (5) for feeding material to said distribution chamber, distribution channels (3) for feeding material from said distribution chamber to said extrusion holes (30), wherein said distribution chamber comprises an insert (9) adapted to limit the volume available for the passage of material within said distribution chamber (4) from the feed channel (5) to the distribution channels (3), wherein in at least one moving-away direction from the feed channel (5) arranged in a plane perpendicular to the extrusion surface, the volume for the passage of material increases as a function of the distance from said feed channel (5).

## Description

The present invention relates to a spinning head for producing filaments, in particular spinning heads having large dimensions, that is to say having a width (i.e. a dimension measured along a direction perpendicular to the direction of filament extrusion) greater than 400 mm.

It is known to produce filaments by extruding material, typically polymer, through spinnerets equipped with a spinning head having a plurality of extrusion holes, which are typically arranged in multiple series.

In the spinneret head there are one or more distribution chambers to feed material to the extrusion holes. Specifically, distribution channels extend from the distribution chamber and feed material to the extrusion holes. The extrusion holes can be arranged at the end of the distribution channels (i.e., there is one hole per channel), or a distribution channel can feed multiple extrusion holes. A single distribution chamber can be provided for all holes, or holes placed in different positions can be fed by different distribution chambers. Typically, there is a single feed channel for each distribution chamber, which feeds material to the extrusion holes.

Typically, the filaments extruded from the holes that are farthest away from the feed channel have mechanical properties that are unsatisfactory or, in any case, inferior to those of the filaments extruded from holes that are closer to the feed channel.

The Applicant found that this difference in properties is affected by the different residence time of the material inside the distribution chamber, depending on the extrusion hole from which the material is extruded, so that the temperature (and therefore the fluidity/viscosity) of the material can vary significantly between holes of different series.

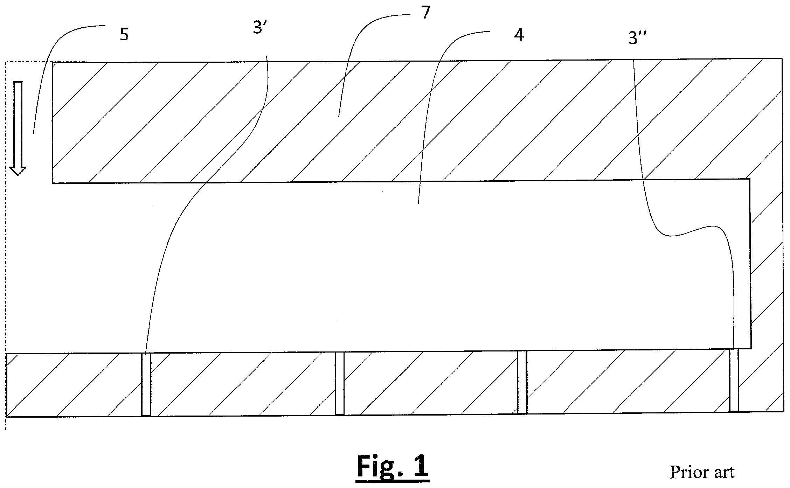

Specifically, a distribution chamber 4 of the known art is shaped as in Figure 1, with an upper feed channel 5 and a plurality of lower distribution channels 3.

The path, and therefore the residence time, of the molten material inside the distribution chamber is significantly longer at the holes fed by the distribution channel 3", that is to say the holes farthest away from the feed channel 5, than the residence time inside the distribution chamber 4 of the material extruded from the holes fed by the distribution channel 3", that is to say the holes closest to feed channel 5.

Object of the present invention is therefore to equalize (or at least improve the uniformity of) the properties of the filaments extruded from different series of extrusion holes which are fed from the same distribution chamber.

These and other objects are solved by a spinning head and a related apparatus according to the appended claims.

In particular, the subject matter of the present invention is a spinning head and related apparatus according to the independent claims, while preferred aspects are set forth in the dependent claims.

According to an aspect, a spinning head for a plant for producing synthetic filaments comprises a body provided with an extrusion surface having a plurality of extrusion holes, a distribution chamber made in the body and comprising a plurality of walls, a feed channel for feeding material to the distribution chamber, distribution channels for feeding material from the distribution chamber to the extrusion holes, wherein the distribution chamber comprises an insert adapted to limit the volume available for the passage of material within the distribution chamber from the feed channel to the distribution channels, wherein in at least one moving-away direction from the feed channel arranged in a plane perpendicular to the extrusion surface, the volume for the passage of material increases as a function of the distance from the feed channel.

Therefore, thanks to the present solution, the resistance provided to the passage of material by the insert decreases progressively while moving away from the feed channel. As a result, the material does not tend to have a preferential, or otherwise faster, path between the feed channel and the distribution channels arranged at the feed channel. This means that the residence time of the material is uniform, or at least varies very little, between the various distribution channels, irrespective of their location, i.e. irrespective of their distance from the feed channel.

According to an aspect, considering a plan view, along the moving-away direction, a distance of an outer surface of the insert, with respect to the inner surface of the distribution chamber facing the outer surface of the insert, increases progressively while moving away from the feed channel, so as to progressively increase the volume for the passage of the material along the moving-away direction.

According to a possible aspect, the insert has a plurality of openings or channels, wherein the insert is configured so that the material passes into the distribution chamber essentially through the openings or channels. The openings or channels are sized and/or arranged so that the volume for the passage of the material increases as a function of the distance from the feed channel along the moving-away direction.

Hereinafter, holes that are made entirely within the insert will be referred to as openings. Therefore, the material inside a hole is only in contact with the insert. Instead, channels are made at an outer surface of the insert, so that the material inside a channel is in contact with both the insert and an inner surface of the distribution chamber.

In order to achieve the increase in volume discussed above, the openings or channels preferably have increasing section and/or density depending on the distance from the feed channel along the moving-away direction.

Typically, embodiments comprise only openings or only channels, although the use of both openings and channels in the same embodiment is not excluded.

In preferred embodiments, in plan view, the spinning head has substantially rectangular section and the moving-away direction is parallel to one of the sides of the rectangular section of the spinning head, preferably to one of the longer sides of that rectangular section.

Furthermore, a subject matter of the present invention relates to an apparatus for producing filaments which comprises a spinning head according to one or more of the preceding aspects. Typically, such an apparatus is a spunbond apparatus for producing nonwoven fabrics.

A subject matter of the present invention further relates to a process for extruding filaments by means of an apparatus according to this apparatus, comprising the step of sending molten polymer material to the distribution chamber of the spinning head and the step of extruding a plurality of filaments from the extrusion holes.

Preferably, the temperature of the filaments extruded from the extrusion holes is basically homogeneous.

This temperature can be measured by optical detectors, for example.

According to an aspect, the difference in the residence time of the material inside the distribution chamber between material exiting different holes is less than 20 minutes, preferably less than 15 minutes.

This difference can be estimated, for example, by a color change of the extrusion material.

If a material of a first color is fed to the distribution chamber, all filaments extruded from the extrusion holes are of that first color.

By subsequently feeding a material of a second color, the filaments extruded from the extrusion holes change color from the first color to the second color. This transition is faster for holes closer to the feed channel, whereas it is slower for filaments extruded from extrusion holes farther from the feed channel. The difference in the elapsed time for the transition from the first to the second color of the filaments between the extrusion holes provides an estimate of the difference in the residence time of the extruded material inside the distribution chamber between those holes. This operation can be repeated several times (e.g. three times) to obtain an average value of time difference between the various repetitions. The extruded filaments for such tests are preferably made of polypropylene.

Hereinafter, referring to the appended figures, exemplary and non-limiting embodiments of the present invention will be described, in which:
- Figure 1 is a schematic view of a spinneret head according to a known-art solution;
- Figure 2 is a schematic view of a half section of a spinneret head according to an embodiment of the present invention;
- Figure 3 is a schematic bottom view of the extrusion surface of a spinneret head according to an embodiment of the present invention;
- Figure 4a is a schematic plan view of a section of a spinneret head according to an embodiment of the present invention;
- Figure 4b is a schematic side view of a section of an insert of the spinneret head in Figure 4a, according to an embodiment of the present invention.
- Figure 5 is a schematic plan view of a section of a spinneret head according to a further embodiment of the present invention;
- Figure 6 is a schematic plan view of a section of a spinneret head according to a further embodiment of the present invention;

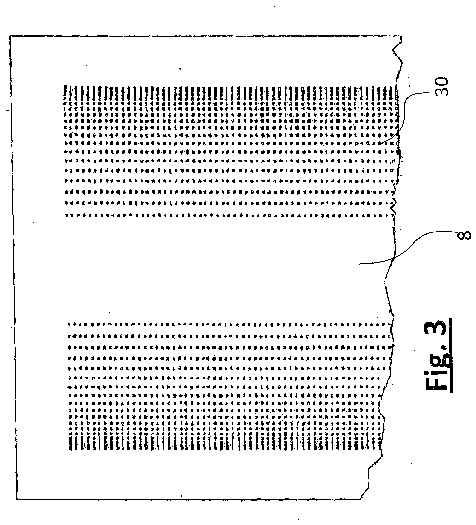

A spinning head 1 for a plant for making synthetic filaments comprises a body 7 equipped with an extrusion surface 8 provided with a plurality of extrusion holes 30. The holes 30 are typically arranged depending on the geometry of the spinning head and in particular the extrusion surface 8. Typically, the extrusion surface 8 has rectangular geometry. In this case, the holes are preferably typically arranged along rows, as for example shown in Figure 3. The extrusion holes 30 may be arranged in several groups, as in Figure 3, where there are two groups of holes separated from each other. Thus, there is a portion of the extrusion surface 8 without extrusion holes 30 between the different groups of holes.

In possible embodiments, the density of the extrusion holes 30 on the extrusion surface 8 is variable. However, embodiments in which the density of the extrusion holes 30 on the extrusion surface 8 is substantially constant are possible.

The body 7 of the spinning head 1 comprises a distribution chamber 4 for feeding material to the extrusion holes 30, and a feed channel 5 for feeding material to the distribution chamber 4.

Specifically, feed channels 3 extend from the distribution chamber 4 and are connected to the extrusion holes 30. Both embodiments in which each distribution channel 3 terminates in an extrusion hole 30 and embodiments in which a single distribution channel 3 feeds multiple extrusion holes 30 via fluidic elements (typically channels or chambers, not shown in detail in the figures) interposed between the distribution channels 3 and the extrusion holes 30, are possible.

Typically, the material is a polymer material adapted to form synthetic filaments once it is extruded from the spinning head 1.

The distribution chamber 4 comprises one of the inner walls or surfaces 2a, 2b, 6a, 6b. Typically, the distribution chamber has substantially rectangular prismatic (i.e., cuboid) shape, with an upper inner surface 2a, a lower inner surface 2b and side inner surfaces 6a, 6b, 6c, 6d.

Typically, the lower inner surface 2b faces toward, and is parallel to, the extrusion surface 8.

An insert 9 is arranged within the distribution chamber 4, so as to reduce the inner volume of the distribution chamber 4 available for the material.

The insert 9 is typically made of metal material, or in any case of a material which is resistant to temperatures the polymer material is subjected to when it is inserted into the distribution chamber 4, during use.

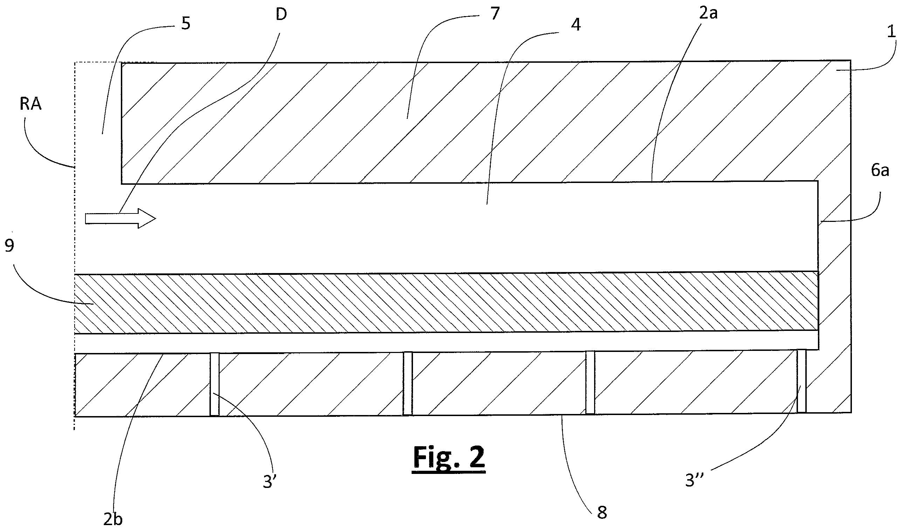

For the sake of simplicity, the insert 9 is shown in Figure 2 spaced from the lower inner surface 2a of the distribution chamber 4. Typically, as matter of fact, there are supporting elements (not shown in the figures) adapted to hold the insert in place. Alternatively, the lower portion of the insert 9 may have one or more protrusions adapted to lean against the distribution chamber 4.

The insert 9 defines the volume available for the passage of material into the distribution chamber, from the feed channel 5 towards the distribution channels 3. This volume increases along at least one moving-away direction D from the feed channel 5.

The moving-away direction D from the feed channel 5 is considered on a section plane orthogonal to the extrusion surface 8 and is typically parallel to the lower inner surface 2b. Typically, such moving-away direction D is considered from a straight line RA perpendicular to the extrusion surface 8, which intersects the axis of the feed channel 5 at the outlet of the feed channel 5 within the distribution chamber 4. Typically, as in the appended figures, the axis of the feed channel 5 is perpendicular to the extrusion surface 8. In such a case, the straight line RA coincides with the axis of the feed channel 5.

In other words, considering a plan view of the distribution chamber 4, the section defined by the insert 9 for the passage of the polymer material increases while moving-away from the feed channel 5.

It should be noted that on a plane there are only two moving-away directions from the RA line. The volume available for the passage of the material increases for at least one, preferably both, of the two moving-away directions.

Two preferred solutions are discussed below.

According to a possible aspect, considering a plan view, an outer surface 9a of the insert has progressively increasing distance X with respect to the inner surface (typically an inner side surface 6c) of the distribution chamber that faces the outer surface of the insert 9.

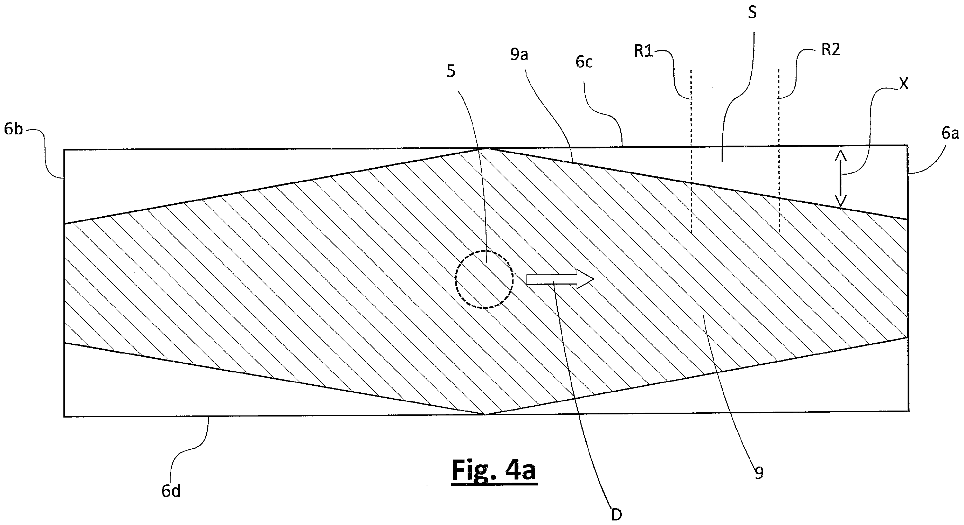

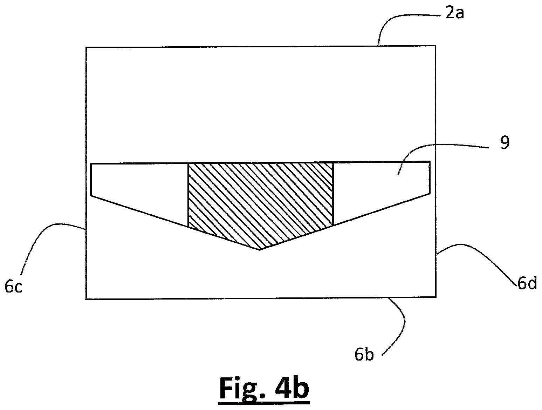

Preferred embodiments, such as the one schematically shown in Figure 4a and Figure 4b, have multiple outer surfaces adapted to satisfy this property. It should be noted that in Figure 4a, the outlet of the distribution channel 5 is depicted by a dashed line lying in a plane parallel to the inner surface 2b and placed above the inner surface 2b and above the insert 9.

Typically, therefore, at least one outer surface 9a of the insert 9 is inclined with respect to an inner surface 6c of the distribution chamber 4 facing that outer surface 9a of the insert 9. Thus, in preferred embodiments, by drawing two straight lines R1, R2 perpendicular to the inner surface 6c of the distribution chamber, which intersect both the inner surface 6c of the distribution chamber 4 and the outer surface of the insert 9, the volume for the passage of the polymer material between the insert 9 and the distribution chamber 4 has section S in the shape of a rectangular trapezium, in which the smaller base faces the distribution channel 5, i.e., is at a shorter distance from the distribution channel 5 than the larger base (distance measured in the moving-away direction D).

In such embodiments, the insert defines a continuous space between the insert 9 and the distribution chamber 4 for the passage of polymer material.

In possible alternative solutions, the volume for passage of the distribution material is defined by several elements separated from each other, typically openings 10 or channels 11.

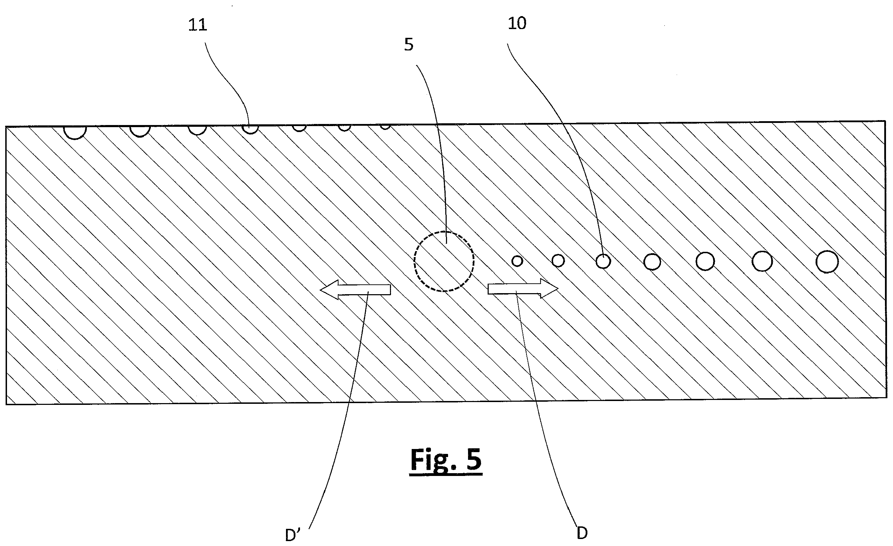

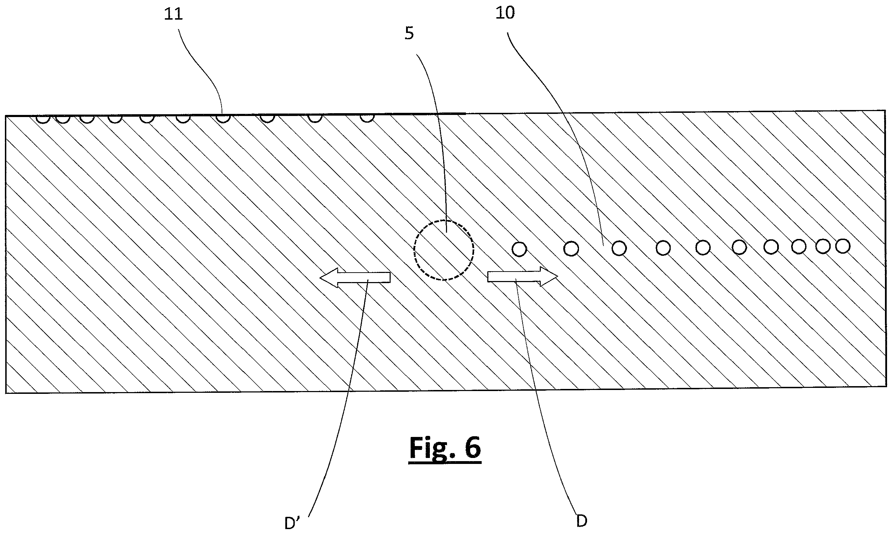

Openings 10 are shown in the right portion of the embodiments of Figures 5 and 6, and channels 11 are shown in the left portion of those figures.

Actually, while embodiments that combine both channels and openings are not excluded, preferred embodiments have only channels or only openings.

In embodiments provided with channels and/or openings, the insert 3 typically has outer surfaces which are in contact with the inner surfaces of the distribution chamber so that, in their path in the distribution chamber, in at least one plan section of the insert, the material can pass the insert only at the channels and openings. In other words, preferably, if channels and openings were eliminated, the polymer material could not pass the insert 9 and therefore could not reach the distribution channels 3.

It is generally easier to make channels 11 than openings 10, so channels 11 are generally the preferred solution over openings 10.

In general, channels 11 and/or openings 10 are arranged in such a way that an increasing volume of material is allowed to pass through when moving away from the feed channel 5.

This can be accomplished in several ways.

According to possible solutions, as in Figure 5, the openings 10 or channels 11 have progressively increasing size along the moving-away direction D, D'. It should be noted that, in the figures, the moving-away direction D is the one related to the openings 10, whereas the moving-away direction D' is that related to the channels 11. In other embodiments, as shown schematically in Figure 6, it is possible to vary the density of openings 10 or channels 11 by increasing their number per unit area while moving away from the feed channel 5, i.e., by increasing their density along the moving-away direction D, D'.

Embodiments that combine both a density and size variation along the moving-away direction D, D' are also possible, in order to increase the volume available for the passage of the polymer material moving away from the feed channel 5.

Less preferred embodiments may provide a single opening having a section whose area (e.g., triangular or trapezoidal) progressively increases while moving away from the feed channel 5. This embodiment thus turns out to be a less preferred variant of embodiments similar to the one in Figure 2, which can be regarded as having a single channel having progressively increasing size while moving away from the feed channel 5.

For the sake of simplicity, embodiments provided with a single feed channel 5 were discussed. However, embodiments with multiple feed channels are possible 5. The properties discussed above apply to at least one of the feed channels 5.

In use, some molten polymer material is fed, in a known manner, to the feed channel 5 (or to the feed channels 5).

The distribution chamber 4 is then filled with the polymer material, which then passes through the distribution channels and, from these, reaches the extrusion holes, then exiting them so as to form flows of high-temperature material that, upon cooling, form polymer filaments. In particular, due to the insert 9, the difference in the residence time inside the distribution chamber of the material extruded from different holes is reduced, and the maximum difference is typically less than 20 minutes, preferably than 15 minutes. In other words, the time spent by some polymer material inside the distribution chamber 4 before being extruded from the extrusion holes farthest from the feed channel 5 does not differ excessively from the time spent by some polymer material inside the distribution chamber 4 before being extruded from the extrusion holes closest to the feed channel 5.

The extrusion temperature, i.e., the temperature of the polymer material at the extrusion holes, is substantially homogeneous for all holes, with variability preferably within 10°C, more preferably within 5°C, even more preferably within 2°C. In other words, by evaluating the temperature of the polymer material extruded from each extrusion hole, a minimum value of the temperature at a first extrusion hole and a maximum value of the extrusion temperature at a second hole can be defined. The difference between this minimum value and this maximum value (which can be assessed by optical systems, for example) is preferably less than 10°C, more preferably within 5°C, even more preferably within 2°C.

## Claims

1. Spinning head (1) for a plant for making synthetic filaments, comprising a body (7) provided with an extrusion surface (8) having a plurality of extrusion holes (30), a distribution chamber (4) made in said body and comprising a plurality of walls, a feed channel (5) for feeding material to said distribution chamber, distribution channels (3) for feeding material from said distribution chamber to said extrusion holes (30), wherein said distribution chamber comprises an insert (9) adapted to limit the volume available for the passage of material within said distribution chamber (4) from the feed channel (5) towards the distribution channels (3), wherein in at least one moving-away direction (D) from the feed channel (5) arranged in a plane perpendicular to the extrusion surface, the volume for the passage of material increases as a function of the distance from said feed channel (5).

2. Spinning head according to claim 1 wherein, along said moving-away direction (D), considering a plan view, a distance of an outer surface (9a) of said insert (9) with respect to the inner surface (6c) of said distribution chamber facing said outer surface (9a) of said insert, increases progressively while moving away from said feed channel, so as to progressively increase the volume for the passage of said material along said moving-away direction (D).

3. Spinning head (1) according to claim 1, wherein said insert (9) has a plurality of openings (10) or channels (11), wherein the insert (9) is configured so that the passage of material into said distribution chamber (4) occurs essentially through said openings (10) or channels (11), wherein said openings (10) or channels (11) have size and/or arrangement such that the volume for the passage of material increases as a function of distance from said feed channel (5) along said moving-away direction.

4. Spinning head according to claim 3, wherein said openings (10) or channels (11) have increasing section and/or density depending on the distance from said feed channel (5) along said moving-away direction.

5. Spinning head according to one or more of the preceding claims, wherein, in plan view, the spinning head has substantially rectangular section and said moving-away direction (D) is parallel to one of the sides of the rectangular section of the spinning head, preferably to one of the longer sides of said rectangular section.

6. Apparatus for producing filaments, comprising a spinning head according to one or more of the preceding claims.

7. Process for extruding filaments by means of an apparatus according to claim 6, comprising the step of sending molten polymer material to said distribution chamber (4) of said spinning head (1), extruding a plurality of filaments from said extrusion holes (30).

8. Process according to claim 7, wherein the temperature of the filaments extruded from said extrusion holes (30) is substantially homogeneous.

9. Process according to claim 7 or 8, wherein the difference in the residence time of the material inside the distribution chamber (4) between material exiting different holes is less than 20 minutes, preferably less than 15 minutes.
